# FASCICULE DE BREVET EUROPEEN

(11) **EP 0 489 620 B1**
(45) Date de publication et mention de la délivrance du brevet: **07.02.1996**
(21) Numéro de dépôt: 91403190.1
(22) Date de dépôt: 26.11.1991
(51) Int. Cl.: G05D 1/03

(54) **Système et procédé de guidage d'un robot à l'aide d'un repère définissant sa trajectoire**
System und Verfahren zur Lenkung eines Robotors, der seine Bahn über Wegmarken definiert
Guiding method and system for a robot defining its path by way of guidemarks

(30) Priorité: 28.11.1990 FR 9014875
(43) Date de publication de la demande: 10.06.1992
(73) Titulaire: COMMISSARIAT A L'ENERGIE ATOMIQUE, F-75015 Paris (FR)
(72) Inventeur: Detriche, Jean-Marie, F-78590 Noisy le Roi (FR)
(74) Mandataire: Ilgart, Jean-Christophe

(56) Documents cités:
- EP-A- 0 252 219
- GB-A- 2 143 969
- PATENT ABSTRACTS OF JAPAN vol. 10, no. 147 (P- 460)(2204), 29 mai 1986;& jP - A - 61000817 (FUJI SHIYARIYOU) 06.01.1986
- PATENT ABSTRACTS OF JAPAN vol. 9, no. 68 (P-344)(1791),28 mars 1985; & JP -A-59202516 (ISHIKAWAJIMA HARIMA) 16.11.84
- PATENT ABSTRACTS OF JAPAN vol. 4, no. 35 (P-3)(517), 25 mars 1980; & JP - A - 55009288 (TOYO KOGYO) 23.01.1980
- PATENT ABSTRACTS OF JAPAN vol. 10, no. 290 (P- 503)(2346), 2 octobre 1986; & JP - A - 61110208 (DAIFUKU) 28.05.1986

## Description

L'invention se rapporte à un système et à un procédé de guidage d'un robot où un repère définit la trajectoire du robot.

On connaît déjà de nombreux systèmes où un robot est assujetti à suivre une trajectoire définie par une bande de couleur peinte sur le sol ou par un fil électrique émettant un champ magnétique. Cette dernière réalisation est souvent préférée car le fil peut être enterré et ainsi protégé. Le robot se déplace au-dessus du repère linéaire et possède un ensemble de repérage ou d'observation comprenant des capteurs adaptés, optiques ou magnétiques, qui lui permettent de repérer sans cesse sa position latérale par rapport au repère et contribuent à diriger le robot pour éliminer ses déviations latérales et le maintenir au-dessus du repère. L'inconvénient principal de ces systèmes, qui sont par ailleurs d'utilisation simple et nécessitent des capteurs peu coûteux, est que les changements de trajet nécessitent d'établir un nouveau repère, ce qui peut être assez coûteux, surtout si on utilise des fils magnétiques enterrés.

On connaît également un système, exposé dans le brevet européen 0 278 853, dans lequel des informations de direction sont contenues dans des balises formées de chapelets d'aimants permanents définissant un codage et qui s'étendent sur une fraction assez faible de la trajectoire parcourue. L'alignement de deux aimants extrêmes fournit une référence de position latérale, longitudinale et d'orientation au robot. Un tel système nécessite cependant des capteurs assez nombreux disposés suivant une rangée orientée transversalement à la direction du robot afin d'obtenir des mesures, et des calculs précis doivent par ailleurs être menés. De plus, seuls sont possibles des recalages sur des références rectilignes.

On a cherché en concevant l'invention à s'affranchir de la lourdeur que représentent les repères continus sans cependant accepter les désavantages de ce système à aimants permanents dus notamment à la précision exigée lors de l'implantation des bornes magnétiques.

Le repère qui est suivi permet de définir sur la trajectoire des tronçons discontinus terminés dans le sens de parcours du robot par des parties à rayon de courbure constant qui peuvent être rectilignes. Ces parties sont reliées au tronçon qui les suit par une portion de raccordement intermédiaire tangente à ladite partie et de même rayon de courbure.

Le procédé correspondant consiste à suivre les tronçons de manière connue au moyen de l'ensemble d'observation et à suivre les portions de raccordement intermédiaires en interrompant les réglages des organes locomoteurs du robot atteints à l'issue des tronçons. Le brevet GB-A-2 115 182 décrit bien des tronçons discontinus de repérage d'une trajectoire, mais sur de courtes portions rectilignes et uniquement pour réajuster la trajectoire parcourue. Ce système ne permet pas de guider le robot comme le fait l'invention et impose une définition complète de la trajectoire par une programmation. Une programmation est encore nécessaire dans JP-A-61 000 817, dont l'abrégé (Patent Abstract of Japan, vol. 10, n° 147, page 460 [2204] du 29 mai 1986) décrit un repère discontinu de trajectoire et un robot parcourant des tronçons intermédiaires en étant asservi à des caps enregistrés en mémoire. Il faut donc se servir d'un capteur de cap, et les tronçons intermédiaires sont forcément rectilignes.

Le repère peut être formé de balises discontinues qui nécessitent des localisations par un capteur situé sur le robot pour calculer la position de celui-ci par rapport à une trajectoire programmée le long des tronçons. Dans une conception plus simple, on utilise un repère linéaire tel qu'un fil magnétique, une bande colorée ou une ligne analogue qui est disposée le long de la trajectoire et la matérialise. Les moyens d'observation peuvent alors régler de façon empirique, par impulsions de réglage par exemple, les organes locomoteurs pour faire converger la trajectoire effectivement parcourue vers la trajectoire théorique. Aucune programmation de la trajectoire n'est nécessaire dans cette réalisation.

Selon l'invention, il existe des parties de la trajectoire à rayon de courbure constant à la fin desquelles les localisations des balises sont interrompues ou ne sont plus exploitées. Le robot se déplace alors en aveugle sans modifier l'état des organes locomoteurs ou directeurs. Les parties de la trajectoire à rayon de courbure constant permettent de stabiliser le déplacement (trajet) du robot sur la trajectoire pour parcourir ensuite les portions entre tronçons sans risque qu'il ne s'égare à cause de l'accumulation d'erreurs de position produites par une mauvaise direction initiale. Si la trajectoire est définie par des balises discontinues, le procédé peut être complété par des déterminations de la position du robot le long de la trajectoire, soit par un capteur de déplacement embarqué sur le robot et qui mesure la longueur du chemin suivi sur la trajectoire, soit par des bornes implantées près de la trajectoire ou sur elle, notamment aux endroits où les commandes des éléments locomoteurs consécutives aux localisations sont interrompues.

Cette conception permet de suppléer à des lacunes du repère dans des endroits où il ne peut être implanté ou s'il est effacé, masqué ou détruit localement.

On va maintenant procéder au commentaire des figures suivantes annexées à titre illustratif et non limitatif :
- la figure 1 représente schématiquement le mode de guidage par fil magnétique ;
- la figure 2 représente la courbe permettant le recalage du robot ;
- la figure 3 représente une trajectoire selon l'invention ;
- la figure 4 représente l'organigramme utilisé ;
- la figure 5 représente l'organigramme de vérification de la stabilisation du parcours du robot sur une partie de la trajectoire à rayon de courbure constant ; et
- la figure 6 représente un autre genre d'installation et de procédé de guidage conforme à l'invention.

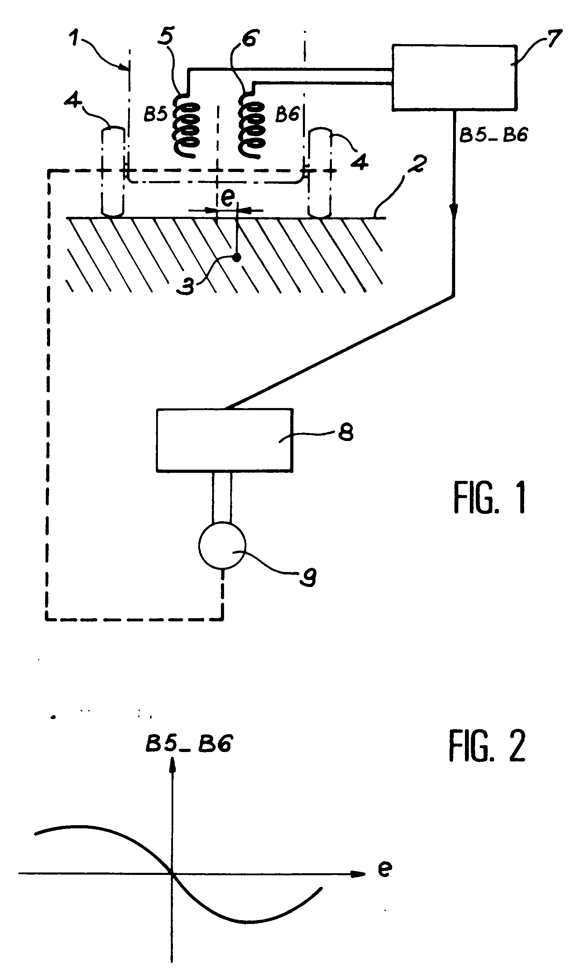

Le robot 1 de la figure 1 évolue au moyen de roues 4, dont une paire de roues directrices, sur un sol 2 dans lequel un fil 3 émettant un champ magnétique a été enterré. Deux bobines 5 et 6 électromagnétiques, identiques et parallèles, sont disposées sur le robot 1 avec un écart latéral. Si on appelle e la distance latérale du fil 3 par rapport au plan équidistant des bobines 5 et 6, la relation entre cette distance e et la différence entre les champs magnétiques B5 et B6 captés par les bobines 5 et 6 est donnée par la figure 2. Un système électronique 7 produit cette différence et la fournit à un système de commande 8 qui agit sur un moteur 9 d'orientation. Les roues directrices 4 sont orientées par le moteur 9 pour ramener autant que possible la distance e à une valeur nulle. Si le robot n'a pas de roues directrices, l'invention peut être mise en oeuvre en commandant les roues droite et gauche par un moteur distinct, et les rotations sont provoquées par des vitesses différentes des moteurs droit et gauche. Il en va de même avec des robots à chenilles.

Des robots mobiles différents peuvent aussi être dirigés à l'aide de ce système de capteurs qui constituent des moyens d'observation.

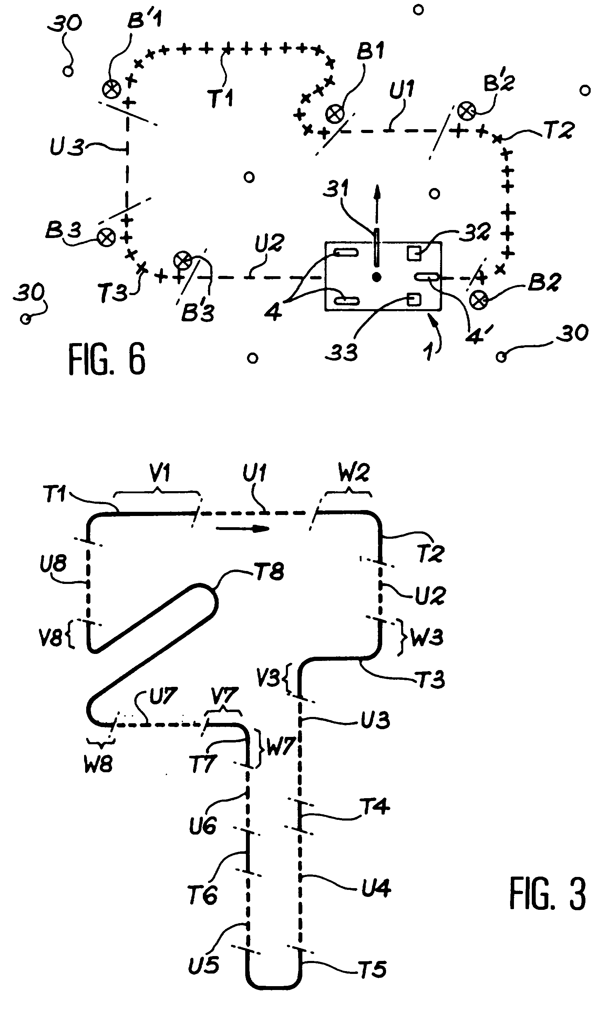

La trajectoire représentée sur la figure 3 est partiellement définie par un repère formé de tronçons de fil magnétique, ici au nombre de huit et référencés T1 à T8. Ils sont parcourus dans cet ordre par le robot 1 et séparés par des trajets intermédiaires U1 à U8 représentés en pointillés qui complètent la trajectoire et constituent des portions de raccordement.

Les tronçons T1 à T8 sont de forme variée. T1 et T2 sont en forme d'angle droit et définissent des virages à droite. T3 est un double angle droit qui définit une translation latérale à gauche. T4 et T6 sont des segments rectilignes. T5 est un double angle droit définissant un demi-tour à droite. T7 est un angle droit définissant un virage à gauche et T8 a une forme plus compliquée afin de faire passer le robot 1 par un point particulier. Les trajets intermédiaires U1 à U8 sont tous rectilignes dans cette conception, et on remarque qu'ils sont dans le prolongement de la partie d'extrémité V1 à V8 du tronçon T1 à T8 précédent et de la partie d'origine W1 à W8 du tronçon T1 à T8 suivant. Les parties d'extrémité V des tronçons T possèdent une longueur suffisante pour que la position latérale et la direction du robot 1 soient suffisamment stables et fournissent donc une référence d'alignement pour la suite de la trajectoire. Dès que le robot 1 a quitté les tronçons T, les bobines capteuses sont rendues inactives et le robot 1 parcourt le trajet intermédiaire sans modifier l'état de ses commandes, c'est-à-dire le braquage ou la vitesse des roues, ce qui explique que les trajets intermédiaires U soient en prolongement de parties d'extrémité V.

Les parties d'origine W sont utilisées pour replacer le robot 1 sur les tronçons T, dont le fil magnétique matérialise la trajectoire théorique, et le préparer aux changements de direction qui vont lui être imposés par les courbures des tronçons T. Les incertitudes sur les organes de commande, de transmission et de locomotion font en effet dévier progressivement le robot 1 des trajets intermédiaires U qu'il est censé suivre, ce qui impose de ne pas éloigner excessivement les tronçons T. Les tronçons rectilignes T4 et T6 servent précisément à couper de longues portions rectilignes de trajectoire en parties U3, U4, et U5, U6 de longueurs acceptables.

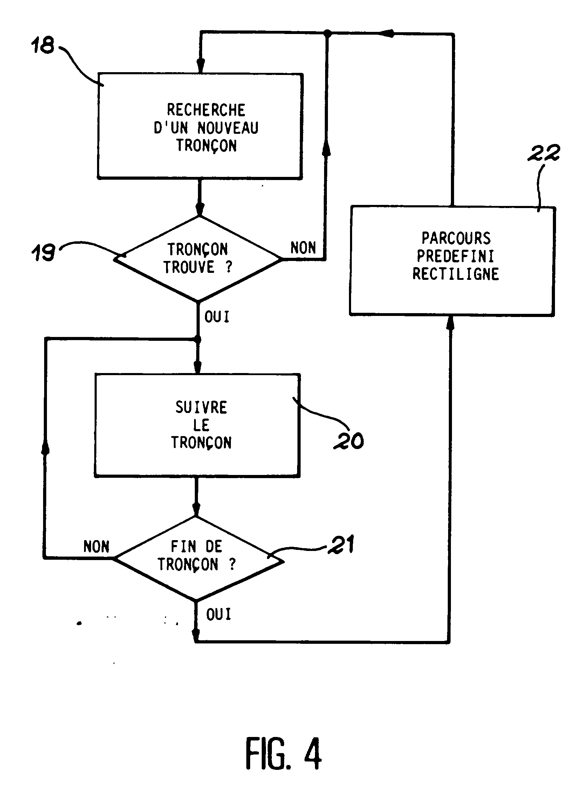

La figure 4 résume le procédé. Quand un trajet prédéfini U est parcouru, le tronçon T à l'avant du robot 1 est recherché périodiquement par le capteur situé le plus à l'avant (étape 18). Une fois que ce nouveau tronçon a été trouvé (étape 19), il est suivi (étape 20) jusqu'à ce que sa fin soit détectée (étape 21). Le système de commande d'orientation du robot 1 est alors bloqué (étape 22) pour accomplir un trajet intermédiaire rectiligne dans cette réalisation, ou plus généralement circulaire, jusqu'au tronçon T suivant.

On vient de décrire le mode de réalisation le plus simple de l'invention ; d'autres existent et vont maintenant être décrits.

L'invention peut être utilisée non seulement avec des tronçons à extrémité rectiligne, mais encore si ces parties d'extrémité ont un rayon de courbure constant : on peut alors faire parcourir commodément des trajets intermédiaires de même rayon de courbure et dans le prolongement de ces parties d'extrémité. Il suffit de ne pas modifier le braquage des roues ou leurs vitesses quand le tronçon est dépassé.

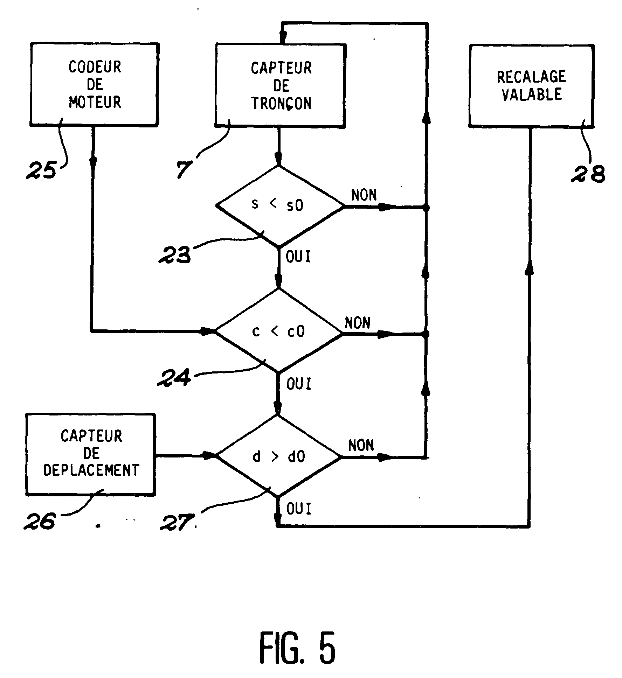

La figure 5 explique comment on vérifie que la partie d'extrémité des tronçons est parcourue correctement. On commence par lire le signal du système électronique 7. Si (étape 23) Le signal obtenu est inférieur à un seuil, on lit (étape 24) l'information d'un codeur 25 lié au moteur 9 et qui est comparée à l'information correspondant à un trajet rectiligne si la partie d'extrémité est rectiligne, ou plus généralement au trajet du rayon de courbure souhaité. Si la différence entre ces informations est inférieure à un seuil, on passe à une interrogation (étape 27) d'un capteur de déplacement 26 lié au robot 1. S'il apparaît que les conditions déterminées aux étapes précédentes 23 et 24 ont été satisfaisantes depuis qu'une distance déterminée a été parcourue, le recalage de La trajectoire sur la partie d'extrémité du tronçon est jugé satisfaisant (étape 28). Sinon, on repasse tout de suite à une nouvelle lecture du système électronique 7 pour déterminer à nouveau l'état du système.

Les différents seuils utilisés sont fixés par expérience. Dans le cas où Les parties d'extrémité des tronçons ont des rayons de courbure différents, la comparaison à un seuil effectuée à l'étape 24 peut être remplacée par une mesure de la stabilisation de l'état du système de commande, c'est-à-dire une comparaison de son état actuel à ses états mesurés précédemment.

Une dernière réalisation principale d'un procédé de guidage a été représentée à la figure 6. La trajectoire comporte des tronçons T1 à T3 qui ne sont pas matérialisés sur le sol par un fil continu mais n'existent que sous forme d'informations apprises par le système de commande 8 du robot 1, telles que des coordonnées de points de modélisation de ces tronçons T1 à T3 dans un repère absolu défini par des balises 30 en nombre suffisant autour de la trajectoire. Les balises 30 peuvent être des poteaux verticaux réfléchissants dont les emplacements ont également été appris par le robot 1, qui est muni d'un laser 31 tournant autour d'un axe vertical. Quand le rayonnement lumineux émis par le laser 31 tournant est réfléchi par une balise 30, il est renvoyé vers un capteur lumineux qui tourne avec le laser 31. Un codeur de rotation permet de déterminer l'angle entre la direction de l'avant du robot 1 et la direction de la balise 30 atteinte. Quand trois de ces angles ont été mesurés pour trois balises 30 différentes, la position et l'orientation exactes du robot 1 peuvent être calculées, puis la distance du parcours réel du robot 1 par rapport à la trajectoire qu'il devrait suivre. Il est alors possible de modifier le réglage des organes locomoteurs, ici les roues 4 directrices, pour ramener le robot 1 vers le tronçon T actuellement parcouru (une roue non directrice est désignée par 4').

De telles localisations de la position du robot 1, qui peuvent d'ailleurs être menées autrement que par des triangulations, notamment si le capteur lumineux et le laser 31 sont conçus pour mesurer la distance à la balise 30 atteinte, sont menées en nombre suffisant pour obtenir une bonne stabilisation du parcours du robot 1 aux endroits à rayon de courbure constant où les tronçons T finissent. Comme rien ne matérialise le passage du robot 1 aux trajets intermédiaires U qui alternent avec les tronçons T pour composer avec eux la trajectoire, il faut disposer d'un moyen pour déterminer l'endroit de ce passage avec une précision suffisante. Il peut s'agir d'un capteur de déplacement (odomètre) 32 embarqué sur le robot 1, tel qu'une roue codeuse roulant sur le sol et indiquant la longueur du chemin parcouru sur la trajectoire. Comme les odomètres sont assez peu précis, il peut être conseillé de corriger périodiquement leurs indications, par exemple quand le robot 1 effectue une localisation ou quand il passe devant des points de repère fixes de la trajectoire.

Les localisations de balises sont interrompues ou ne sont pas exploitées quand le robot 1 parcourt les trajets intermédiaires U entre les tronçons T.

Une autre façon de déterminer le début des trajets intermédiaires U consiste comme précédemment à les marquer par des bornes B de nature quelconque (aimants, marques de couleur, etc.) qu'un capteur approprié 33 embarqué sur le robot 1 repère. Quand les trajets intermédiaires U sont parcourus, les localisations des balises 30 sont reprises, mais il peut être intéressant de signaler l'arrivée sur un nouveau tronçon T par une autre borne, B'1 à B'3 respectivement. Les bornes B et B' peuvent être à l'emplacement même de la trajectoire ou un peu à côté.

Toutes ces caractéristiques peuvent être combinées de diverses manières pour obtenir de nouvelles variantes de l'invention. Il est également possible d'utiliser des balises 30 formées d'aimants permanents, d'émetteurs radiofréquences, de repères visuels ou d'autres moyens usuels dans ces techniques de pilotage de robots.

L'invention peut être employée dans des procédés plus complexes : on peut ainsi utiliser à la fois des trajets intermédiaires parcourus en aveugle conformément à l'invention et des trajets intermédiaires prédéfinis soit par une programmation du robot 1 qui lui indique l'ordre des trajets intermédiaires rencontrés et leur nature par un comptage des tronçons T, soit par les bornes B, qui sont alors de différentes sortes et commandent des fonctions particulières (virages d'angles et de rayons de courbure différents, restitution d'un trajet mémorisé par apprentissage, etc.).

## Revendications

1. Système de guidage d'un robot (1) muni de moyens d'observation (5, 6) repérant la position latérale du robot par rapport à un repère établi le long d'une trajectoire sur laquelle le robot se déplace, le repère définissant la trajectoire du robot, le repère étant formé de tronçons (T) discontinus terminés, dans le sens de parcours du robot, par des parties (V) à rayon de coubure constant, caractérisé en ce que les parties à rayon de courbure constant sont reliées au tronçon (T) suivant respectif dans le sens de parcours du robot par des portions de raccordement intermédiaire tangentes auxdites parties à rayon de courbure constant et de même rayon de courbure.

2. Système de guidage d'un robot suivant la revendication 1, caractérisé en ce que les tronçons comprennent des bornes (B) de positions atteintes sur la trajectoire par le robot.

3. Système de guidage d'un robot suivant la revendication 2, caractérisé en ce que les bornes sont situées à la fin des parties à rayon de courbure constant dans le sens de parcours du robot.

4. Système de guidage d'un robot suivant l'une quelconque des revendications 1 à 3, caractérisé en ce que les tronçons (T) sont formés chacun d'une ligne continue disposée sur la trajectoire.

5. Procédé de guidage d'un robot mobile le long d'une trajectoire conformément au système de l'une quelconque des revendications précédentes, consistant à régler des organes locomoteurs du robot le long des tronçons, au moyen d'observations du repère, de manière à replacer le robot sur la trajectoire et caractérisé en ce qu'il consiste à maintenir les organes locomoteurs à un état atteint sur les parties (V) à rayon de courbure constant pendant que le robot traverse les portions de raccordement intermédiaires, jusqu'à ce qu'un tronçon (T) suivant soit atteint.

6. Procédé de guidage d'un robot suivant les revendications 2 et 5, caractérisé en ce que le réglage des organes locomoteurs ou le maintien de l'état des organes locomoteurs est déclenché par le passage du robot devant les bornes (B).

7. Procédé de guidage d'un robot suivant la revendication 5, caractérisé en ce que le maintien de l'état des organes locomoteurs est déclenché quand les moyens d'observation fournissent un signal représentatif d'un écart latéral du robot à la trajectoire inférieur à un seuil et quand les organes locomoteurs sont stabilisés depuis qu'une distance déterminée a été parcourue.

## Patentansprüche

1. Lenksystem eines Roboters (1), versehen mit Wahrnehmungseinrichtungen (5, 6) zum Festlegen der seitlichen Position des Roboters in bezug auf eine Markierung, eingerichtet längs einer Bahn, auf der der Roboter sich bewegt, wobei die Markierung die Bahn des Roboters definiert und die Markierung gebildet wird durch diskontinuierliche Teilabschnitte (T), in Fahrtrichtung des Roboters endend durch Stücke (V) mit konstantem Krümmungsradius, **dadurch gekennzeichnet,**
daß die Teile mit dem konstanten Krümmungsradius mit dem jeweiligen nachfolgenden Teilabschnitt (T) in Fahrrichtung des Roboters verbunden sind durch Zwischenverbindungsteile, Tangenten an besagten Stücken mit dem konstanten Krümmungsradius und mit demselben Krümmungsradius.

2. Roboter-Lenksystem nach Anspruch 1, dadurch gekennzeichnet, daß die Teilabschnitte Positionsmarken (B) umfassen, die der Roboter auf seiner Bahn erreicht.

3. Roboter-Lenksystem nach Anspruch 2, dadurch gekennzeichnet, daß die Positionsmarken sich in Fahrtrichtung des Roboters am Ende der Stücke mit konstant gekrümmtem Radius befinden.

4. Roboter-Lenksystem nach einem der Ansprüche 1 bis 3, **dadurch gekennzeichnet**, daß jeder der Teilabschnitte (T) gebildet wird durch eine durchgehende, auf der Bahn angeordnete Leitung.

5. Lenkverfahren eines mobilen Roboters längs einer Bahn gemäß dem System eines der vorangehenden Ansprüche, darin bestehend, lokomotorische Organe des Roboters längs der Teilabschnitte zu regeln mittels Wahrnehmungseinrichtungen, um den Roboter wieder auf die Bahn zu setzen und
dadurch gekennzeichnet, daß es darin besteht, die lokomotorischen Organe in einem auf den Stücken (V) mit konstantem Krümmungsradius erreichten Zustand zu halten, während der Roboter die Zwischenverbindungsteile durchläuft, bis ein nachfolgender Teilabschnitt (T) erreicht ist.

6. Roboter-Lenkverfahren nach einem der Ansprüche 2 und 5, dadurch gekennzeichnet, daß die Regelung der lokomotorischen Organe oder das Aufrechterhalten des Zustands der lokomotorischen Organe ausgelöst wird durch das Vorbeifahren des Roboters an den Positionsmarken (B).

7. Roboter-Lenkverfahren nach Anspruch 5, dadurch gekennzeichnet, daß das Aufrechterhalten des Zustands der lokomotorischen Organe ausgelöst wird, wenn die Wahrnehmungseinrichtungen ein Signal liefern, das repräsentativ ist für einen seitlichen Abstand des Roboters von der Bahn, der kleiner ist als ein Schwellenwert, und wenn die lokomotorischen Organe sich stabilisiert haben während einer bestimmten durchlaufenen Wegstrecke.

## Claims

1. System for guiding a robot (1) equipped with observation means (5, 6) marking the lateral position of the robot with respect to a marker set up along a trajectory over which the robot moves, the marker defining the trajectory of the robot, the marker being formed from discontinuous segments (T) terminated, in the direction of travel of the robot, by parts (V) with constant radius of curvature, characterized in that the parts with constant radius of curvature are linked to the respective following segment (T) in the direction of travel of the robot by intermediate connecting portions which are tangent to the said parts with constant radius of curvature and of the same radius of curvature.

2. System for guiding a robot according to Claim 1, characterized in that the segments comprise marker posts (B) of positions reached over the trajectory by the robot.

3. System for guiding a robot according to Claim 2, characterized in that the marker posts are situated at the end of the parts with constant radius of curvature in the direction of travel of the robot.

4. System for guiding a robot according to any one of Claims 1 to 3, characterized in that the segments (T) are each formed by a continuous line arranged on the trajectory.

5. Method of guiding a mobile robot along a trajectory in accordance with the system of any one of the preceding claims, consisting in setting locomotive members of the robot along the segments, by means of observations of the marker, in such a way as to replace the robot on the trajectory, and characterized in that it consists in maintaining the locomotive members in a state reached on the parts (V) with constant radius of curvature while the robot is traversing the intermediate connection portions, until a following segment (T) is reached.

6. Method of guiding a robot according to Claims 2 and 5, characterized in that the setting of the locomotive members or the maintaining of the state of the locomotive members is triggered by the passage of the robot in front of the marker posts (B).

7. Method of guiding a robot according to Claim 5, characterized in that the maintaining of the state of the locomotive members is triggered when the observation means supply a signal representing a lateral separation from the robot to the trajectory less than a threshold and when the locomotive members are stabilized after a defined distance has been travelled.
